(19) Europäisches Patentamt
European Patent Office
Office européen des brevets

(11) **EP 4 416 466 B1**

(12) **EUROPÄISCHE PATENTSCHRIFT**

(45) Veröffentlichungstag und Bekanntmachung des Hinweises auf die Patenterteilung:
**29.10.2025 Patentblatt 2025/44**

(21) Anmeldenummer: **22777997.2**

(22) Anmeldetag: **22.09.2022**

(51) Internationale Patentklassifikation (IPC):
**G01F 1/84** $^{(2006.01)}$

(52) Gemeinsame Patentklassifikation (CPC):
**G01F 1/8413; G01F 1/8418;** G01F 1/8477

(86) Internationale Anmeldenummer:
**PCT/EP2022/076351**

(87) Internationale Veröffentlichungsnummer:
**WO 2023/061719 (20.04.2023 Gazette 2023/16)**

(54) **CORIOLIS-MASSEDURCHFLUSSMESSAUFNEHMER**

CORIOLIS MASS FLOW METER

DÉBITMÈTRE MASSIQUE DE CORIOLIS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.10.2021 DE 102021126715**

(43) Veröffentlichungstag der Anmeldung:
**21.08.2024 Patentblatt 2024/34**

(73) Patentinhaber: **Endress+Hauser Flowtec AG**
**4153 Reinach (CH)**

(72) Erfinder:
• **BITTO, Ennio**
**4147 Aesch (CH)**
• **ZHU, Hao**
**85354 Freising (DE)**
• **BUTZBACH, Dirk**
**68330 Huningue (FR)**

(74) Vertreter: **Endress + Hauser Group Services (Deutschland) AG+Co. KG**
**Colmarer Straße 6**
**79576 Weil am Rhein (DE)**

(56) Entgegenhaltungen:
CN-A- 110 268 231   DE-A1- 102019 114 330
US-A- 5 731 527   US-B2- 10 845 227

**Beschreibung**

Gattungsgemäße Coriolis-Massedurchflussmessaufnehmer sind beispielsweise in EP 1 427 998 B1, WO 2016/202537 A1, und US 10 845 227 B2 offenbart. Sie umfassen mindestens ein erstes schwingfähiges Messrohr zum Führen eines Mediums; mindestens einen Trägerkörper, wobei das mindestens eine erste Messrohr einlaufseitig und auslaufseitig mit dem Trägerkörper verbunden ist; mindestens einen Erreger zum Anregen mindestens einer Biegeschwingungsmode des mindestens einen ersten Messrohrs; mindestens zwei Schwingungssensoren zum Erfassen von Schwingungen des mindestens einen ersten Messrohrs; und mindestens einen ersten Versteifungskörper, welcher an einer Mantelfläche des mindestens einen ersten Messrohrs befestigt ist, um eine Querempfindlichkeit des Kalibrierfaktors calf für die Messung der Massendurchflussrate zum Mediendruck zu reduzieren. Die Versteifungskörper der Geräte nach dem Stand der Technik sind als Ringe ausgebildet, die als Einzelteile auf den Messrohren exakt zu positionieren und zu befestigen sind. Dies erfüllt zwar den angestrebten Zweck, ist aber verhältnismäßig teuer und fehleranfällig bei der Montage. Es ist daher die Aufgabe der vorliegenden Erfindung, hier Abhilfe zu schaffen.

Die Aufgabe wird erfindungsgemäß gelöst durch den Coriolis-Massedurchflussmessaufnehmer gemäß dem unabhängigen Patentanspruch 1.

Der erfindungsgemäße Coriolis-Massedurchflussmessaufnehmer umfasst: mindestens ein erstes schwingfähiges Messrohr zum Führen eines Mediums; mindestens einen Trägerkörper, wobei das mindestens eine erste Messrohr einlaufseitig und auslaufseitig mit dem Trägerkörper verbunden ist; mindestens einen Erreger zum Anregen mindestens einer Biegeschwingungsmode des mindestens einen ersten Messrohrs; mindestens zwei Schwingungssensoren zum Erfassen von Schwingungen des mindestens einen ersten Messrohrs; und mindestens einen ersten Versteifungskörper, welcher an einer Mantelfläche des mindestens einen ersten Messrohrs befestigt ist und das mindestens einer erste Messrohr umgreift, wobei der mindestens eine erste Versteifungskörper zumindest abschnittsweise einen helikalen Verlauf mit mehreren Windungen aufweist, wobei der Abstand zwischen zwei benachbarten Windungen des Versteifungskörpers nicht weniger als das Doppelte, beispielsweise nicht weniger als das Vierfache, und insbesondere nicht weniger als das Achtfache der Materialstärke des Versteifungskörpers im Bereich der Windungen beträgt.

In einer Weiterbildung der Erfindung beträgt die Materialstärke des mindestens einen ersten Versteifungskörpers nicht weniger als die Hälfte, beispielsweise nicht weniger als drei Viertel einer Wandstärke des mindestens einen ersten Messrohrs.

In einer Weiterbildung der Erfindung weist das mindestens eine erste Messrohr einen ersten Werkstoff auf, wobei der mindestens eine erste Versteifungskörper einen zweiten Werkstoff aufweist, und wobei der Wärmeausdehnungskoeffizient des ersten Werkstoffs nicht mehr als 2 ppm/K beispielsweise nicht mehr als 1 ppm/K und insbesondere nicht mehr als 0,5 ppm/K vom Wärmeausdehnungskoeffizienten des zweiten Werkstoffs abweicht.

In einer Weiterbildung der Erfindung sind der erste Werkstoff und der zweite Werkstoff metallisch.

In einer Weiterbildung der Erfindung ist der mindestens eine Versteifungskörper mit dem mindestens einen Messrohr mittels mindestens einer Fügestelle, welche insbesondere eine Hartlotverbindung umfasst, verbunden.

In einer Weiterbildung der Erfindung umfasst die Hartlotverbindung ein Nickelbasislot, insbesondere ein Lot des Typs AMS 4777, BNi-2.

In einer Weiterbildung der Erfindung erstreckt sich die mindestens eine Fügestelle über mindestens eine, beispielsweise mindestens zwei und insbesondere mindestens drei Windungen des mindestens einen Versteifungskörpers um das mindestens einer Messrohr.

In einer Weiterbildung der Erfindung weist der mindestens eine Versteifungskörper zumindest einen Abschnitt auf, welcher Abschnitt zumindest drei, beispielsweise zumindest sechs und insbesondere zumindest acht kontinuierlichen Windungen umfasst.

In einer Weiterbildung der Erfindung weist das mindestens eine Messrohr bezüglich einer Messrohrquerebene einen spiegelsymmetrischen Verlauf auf, wobei das mindestens eine Messrohr zwischen der Messrohrquerebene und einem einlaufseitigen Ende des Messrohrs zumindest einen in der Ruhelage des Messrohrs gebogenen Abschnitt aufweist, in dem sich die Richtung einer Messrohrmittenlinie des mindestens einen Messrohrs um einen Winkel $\delta$ ändert, der nicht kleiner als 30° ist, wobei der mindestens eine Versteifungskörper in dem gebogenen Abschnitt nicht weniger als a Windungen aufweist, wobei gilt: $a \geq \delta / 20°$, beispielsweise $a \geq \delta / 15°$, und insbesondere $a \geq \delta / 10°$.

In einer Weiterbildung der Erfindung weist das Messrohr bezüglich einer Messrohrquerebene einen spiegelsymmetrischen Verlauf auf, wobei das Messrohr zwischen der Messrohrquerebene und einem einlaufseitigen Ende des Messrohrs zumindest einen in der Ruhelage des Messrohrs gebogenen Abschnitt aufweist, in dem sich die Richtung einer Messrohrmittenlinie um einen Winkel $\delta$ ändert, der nicht kleiner als 30° ist, wobei das Messrohr einen Innendurchmesser d aufweist, wobei die Messrohrmittenlinie im gebogenen Abschnitt einen effektiven Krümmungsradius $r_K$ aufweist, wobei ein Verhältnis $V = 4 \cdot d / r_K$ gegeben ist, wobei gilt, wobei der mindestens eine Versteifungskörper in dem gebogenen Abschnitt nicht weniger als b Windungen aufweist, wobei gilt: $b \geq \delta \cdot V / 20°$, beispielsweise $b \geq \delta \cdot V / 15°$, und insbesondere $b \geq \delta \cdot V / 10°$.

In einer Weiterbildung der Erfindung weist der Versteifungskörper einen ersten Abschnitt mit Windungen auf, die das Messrohr umgreifen, wobei der Versteifungskörper einen zweiten Abschnitt mit Windungen aufweist, die das Messrohr umgreifen, wobei zwischen dem ersten Abschnitt und dem zweiten Abschnitt ein Verbindungsabschnitt verläuft, wobei die Länge des Verbindungsabschnitts, nicht mehr als das Doppelte, des Abstands des ersten Abschnitts vom zweiten Abschnitt in Richtung der Messrohrmittenlinie beträgt.

In einer Weiterbildung der Erfindung ist für den Messaufnehmer ein Kalibrierfaktor calf bestimmbar, welcher eine proportionale Beziehung zwischen einer zu messenden Massendurchflussrate dm/dt und einer Phasendifferenz bzw. Zeitdifferenz zwischen Signalen der Schwingungssensoren beschreibt,

wobei der Kalibrierfaktor calf eine relative Querempfindlichkeit $\Delta$calf($\Delta$p) zur Differenz $\Delta$p zwischen den Druck im Messrohr und den Druck in der Umgebung des Messrohrs aufweist, die gegeben ist als

$$\Delta\text{calf}(\Delta p) := (\text{calf}(p) - \text{calf}(p0)) / \text{calf}(p0)$$

wobei für den Betrag der relativen Querempfindlichkeit |$\Delta$calf($\Delta$p)| bei einem Temperaturgleichgewicht zwischen Medium, Messrohr und Umgebung des Messaufnehmers bei einer Temperatur von 300 K in linearer Näherung gilt:

$$|\Delta\text{calf}(\Delta p)| < S \cdot d_i/t \cdot \Delta p,$$

wobei di der Innendurchmesser des mindesten einen Messrohrs ist, t die Wandstärke des Mindestens einen Messrohrs beschreibt und S eine obere Proportionalitätsschranke ist, für die gilt: S < 6 ppm/bar, beispielsweise S < 5 ppm/bar, und insbesondere S < 4 ppm/bar.

In einer Weiterbildung der Erfindung ist für den Messaufnehmer ein Kalibrierfaktor calf bestimmbar, welcher eine proportionale Beziehung zwischen einer zu messenden Massendurchflussrate dm/dt und einer Phasenbeziehung bzw. Zeitdifferenz zwischen Signalen des einlaufseitigen Schwingungssensors und des auslaufseitigen Schwingungssensors beschreibt,

wobei der Kalibrierfaktor calf eine relative Querempfindlichkeit $\Delta$calf($\Delta$p) zur Differenz $\Delta$p zwischen den Druck im Messrohr und den Druck in der Umgebung des Messrohrs aufweist, die gegeben ist als

$$\Delta\text{calf}(\Delta p) := (\text{calf}(p) - \text{calf}(p0)) / \text{calf}(p0)$$

wobei für den Betrag der relativen Querempfindlichkeit |$\Delta$calf($\Delta$p)| bei einem Temperaturgleichgewicht zwischen Medium, Messrohr und Umgebung des Messaufnehmers bei einer Temperatur von 300 K in linearer Näherung gilt:

$$|\Delta\text{calf}(\Delta p)| = K \cdot \Delta p,$$

wobei K eine gerätespezifische Konstante ist,

wobei für den Betrag der relativen Querempfindlichkeit eines Referenzmessaufnehmers in linearer Näherung gilt:

$$|\Delta\text{calf}_{ref}(\Delta p)| = K_{ref} \cdot \Delta p$$

wobei der Referenzmessaufnehmer bis auf den Versteifungskörper, welcher bei dem Referenzmessaufnehmer entfällt, mit dem Coriolis-Massedurchflussmessaufnehmer identisch ist, wobei gilt: $K_{ref}/K > 2$, insbesondere $K_{ref}/K > 3$.

In einer Weiterbildung der Erfindung umfasst der Coriolis-Massedurchflussmessaufnehmer weiterhin: mindestens ein zweites schwingfähiges Messrohr zum Führen eines Mediums, welches im Wesentlichen baugleich ist mit dem mindestens einen ersten Messrohr, und parallel zu letzterem geführt ist; mindestens einen zweiten Versteifungskörper, welcher an einer Mantelfläche des mindestens einen zweiten Messrohrs befestigt ist und das mindestens eine zweite Messrohr umgreift, wobei der mindestens eine zweite Versteifungskörper einen zumindest abschnittsweise helikalen Verlauf mit mehreren Windungen aufweist, wobei der Abstand zwischen zwei benachbarten Windungen des mindestens einen zweiten Versteifungskörpers nicht weniger als das Doppelte, beispielsweise nicht weniger als das Vierfache, und insbesondere nicht weniger als das Achtfache der Materialstärke des mindestens einen zweiten Versteifungskörpers im Bereich der Windungen beträgt, der Materialstärke des mindestens einen zweiten Versteifungskörpers im Bereich der Windungen gleich der Materialstärke des mindestens einen ersten Versteifungskörpers im Bereich der Windungen ist, wobei der Abstand zwischen dem mindestens einen ersten Messrohr und dem mindestens einen zweiten Messrohr mehr als die einfache Materialstärke der ersten und zweiten Versteifungskörper im Bereich der Windungen beträgt, und wobei der Abstand zwischen dem mindestens einen ersten Messrohr und dem mindestens einen zweiten Messrohr weniger als das Doppelte der Materialstärke der Versteifungskörper im Bereich der Windungen beträgt.

Die Erfindung wird nun anhand der in den Zeichnungen dargestellten Ausführungsbeispiele näher erläutert. Es zeigt:

Fig. 1: eine Gesamtansicht eines Ausführungsbeispiels eines erfindungsgemäßen Coriolis Massedurchflussmessaufnehmers;

Fig. 2: ein Ausführungsbeispiel eines Versteifungskörpers eines erfindungsgemäßen Coriolis-Massedurchflussmessaufnehmers;

Fig. 3: eine Detailansicht eines Längsschnitts durch ein Messrohr eines Ausführungsbeispiel eines erfindungsgemäßen Coriolis-Massedurchflussmessaufnehmers;

Fig. 4a: eine schematische Aufsicht auf einen Abschnitt zweier parallel geführter Messrohre eines Ausführungsbeispiels eines erfindungsgemäßen Coriolis-Massedurchflussmessaufnehmers;

Fig. 4b: eine schematische Aufsicht auf einen Abschnitt zweier parallel geführter Messrohre eines weiteren Ausführungsbeispiels eines erfindungsgemäßen Coriolis-Massedurchflussmessaufnehmers; und

Fig. 5: eine Detailansicht eines Messrohrs mit Versteifungskörpern eines Coriolis-Massedurchflussmessaufnehmers nach dem Stand der Technik.

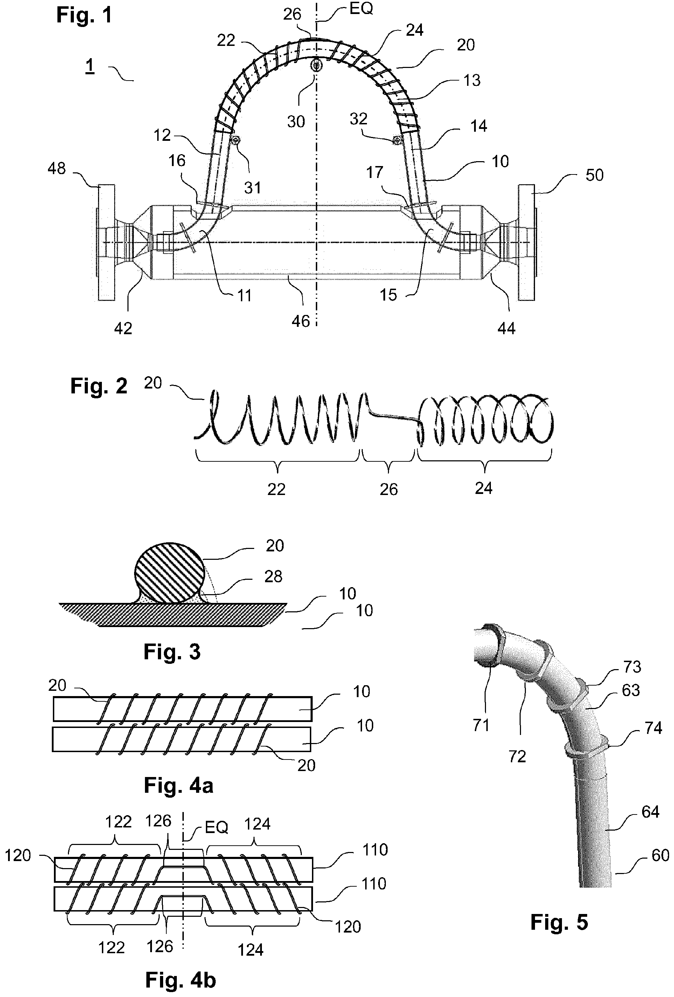

Das in Fig.1 gezeigte Ausführungsbeispiel eines erfindungsgemäßen Coriolis-Massedurchflussmessaufnehmers 1 umfasst zwei parallele Messrohre 10 mit einem Innendurchmesser von gut 15 mm bei einer Wandstärke von 0,9 mm, welche ist aus Edelstahl, beispielsweise 1.4404 oder aus Hastelloy gefertigt sind. Die Nennweite des Coriolis-Massedurchflussmessaufnehmers 1 beträgt hier DN 25. Die Messrohre 10 verlaufen symmetrisch zu einer Messrohrquerebene EQ und weisen jeweils einen Einlaufbogen 11, einen ersten geraden Abschnitt 12 einen Scheitelbogen 13, einen zweiten geraden Abschnitt 14 und einen Auslaufbogen 15 auf. Die Messrohre 10 sind zumindest mit einem einlaufseitigen Koppler 16 und einem auslaufseitigen Koppler 17 miteinander verbunden, wobei durch die Koppler einen Schwingungslänge der Messrohre festgelegt ist. Die Einlaufbögen 11 der beiden Messrohre 10 sind an einen einlaufseitigen Strömungsteiler 42 angeschlossen, welcher einen einlaufseitigen Flansch 48 zum Anschluss an eine Rohrleitung trägt. Die Auslaufbögen 15 der beiden Messrohre 10 sind an einen auslaufseitigen Strömungsteiler 44 angeschlossen, welcher einen einlaufseitigen Flansch 50 zum Anschluss an die Rohrleitung trägt. Die beiden Strömungsteiler 42, 44 sind über ein massives Trägerrohr 46 starr miteinander verbunden, um Relativbewegungen der Strömungsteiler zueinander weitgehend zu unterdrücken.

Zum Anregen von Messrohrschwingungen in einer Biegeschwingungsnutzmode weist der Coriolis-Massedurchflussmessaufnehmer 1 eine elektrodynamische Erregeranordnung 30 auf, die zwischen den Messrohren 10 wirkt und symmetrisch zur Messrohrquerebene EQ angeordnet ist. Zum Erfassen der Messrohrschwingungen weist der Coriolis-Massedurchflussmessaufnehmer 1 einen einlaufseitigen elektrodynamischen Schwingungssensor 31 und einen auslaufseitigen elektrodynamischen Schwingungssensor 32 auf, welche dazu eingerichtet sind, die Relativbewegungen der Messrohre 10 zueinander an der jeweiligen Sensorposition zu erfassen. Eine Zeitdifferenz bzw. Phasendifferenz zwischen den Sensorsignalen der beiden Schwingungssensoren ist proportional zur Massendurchflussrate durch die Messrohre. Dem entsprechend kann die Massendurchflussrate durch Multiplikation einer Phasendifferenz bzw. Zeitdifferenz mit einem Kalibrierfaktor calf ermittelt werden, der diese Proportionalität beschreibt.

Der Kalibrierfaktor calf hängt von einer modalen Biegesteifigkeit der Messrohre ab, welche ihrerseits druckabhängig ist. Daher weist der Kalibrierfaktor calf eine Querempfindlichkeit zum Mediendruck auf. Zur Reduzierung dieser Querempfindlichkeit des Kalibrierfaktors zum Mediendruck ist jeweils ein Versteifungskörper 20 in Form einer Schraubenfeder um die Scheitelbögen 13 der Messrohre 10 geführt und mittels eines Hartlots, insbesondere eines Nickelbasislots wie BNi-2 an dem Messrohr fixiert. Eine mit dem Hartlot gebildete Fügestelle erstreckt sich vorzugsweise über die gesamte Länge des Versteifungskörpers. Die Schraubenfeder weist - wie das Messrohr - einen Edelstahl auf, beispielsweise 1.4310, 1.430. Bei einem Messrohr aus Hastelloy bietet sich ein Duplexdraht an, da letzterer besser mit dem Hastelloy verlötbar ist und vom Wärmeausdehnungskoeffizienten besser passt. Es ist darauf zu achten, dass der Wärmeausdehnungskoeffizient mit dem des Materials der Schraubenfeder des Messrohrs im Wesentlichen übereinstimmt, jedenfalls aber nicht mehr als 1 ppm/K davon abweicht. Die Schraubenfeder hat eine Materialstärke von beispielsweise 2 mm. Ein Coriolis-Massedurchflussmessaufnehmer mit solchermaßen versteiften Messrohren weist eine erheblich geringere Querempfindlichkeit des Kalibrierfaktors calf zum Mediendruck auf als ein Coriolis-Massedurchflussmessaufnehmer mit Messrohren ohne Versteifungskörper. Im Ausführungsbeispiel ist die Druckabhängigkeit auf weniger als ein Drittel des Wertes für einen Coriolis-Massedurchflussmessaufnehmer mit solchen Messrohren ohne Versteifungskörper reduziert.

Das in Fig. 5 gezeigte Messrohr 60 eines Coriolis-Massedurchflussmessaufnehmers mit zwei Messrohren nach dem Stand der Technik unterscheidet sich von dem Ausführungsbeispiel aus Fig. 1 hinsichtlich der Art der Versteifungskörper, welche hier als separate Ringe 71, 72, 73, 74 ausgebildet sind. Die Querempfindlichkeit des Kalibrierfaktors calf zum Mediendruck ist vergleichbar zum erfindungsgemäßen Coriolis-Massedurchflussmessaufnehmers reduziert, jedoch ist die Montage der Versteifungskörper nach dem Stand der Technik erheblich teurer, da hier die Ringe 71, 72, 73, 74 einzeln exakt zu positionieren und mit Lotmaterial zu versehen sind, um asymmetrische Massenverteilungen zu vermeiden. Im Gegensatz dazu ist die erfindungsgemäße Positionierung des Versteifungskörpers am Messrohr eines erfindungsgemäßen Coriolis-Massedurchflussmessaufnehmers erheblich einfacher, da sich aufgrund der Elastizität der Schraubenfeder die gewünschte Zielposition der einzelnen Windungen im Gleichgewichtszustand von selbst einstellt. Weiterhin ermöglicht der Einsatz der Versteifungskörper gemäß der vorliegenden Erfindung einen geringeren Abstand der Messrohre zueinander, da die Versteifungsfunktion verglichen mit den Ringen nach dem Stand der Technik auf mehr Elemente verteilt ist, wobei eine Windung mit einem Ring zu vergleichen ist.

Einzelheiten zum Versteifungskörper sind ergänzend in Fig. 2 dargestellt. Der Versteifungskörper 20 umfasst einen metallischen Draht in einer Stärke von beispielsweise 1,5 mm mit zwei schraubenfederförmigen Abschnitten 22, 24 mit kontinuierlichen Folgen von Windungen, wobei die schraubenfederförmigen Abschnitte 22, 24 durch einen geraden Verbindungsabschnitt 26 verbunden sind, der in erster Näherung parallel zur Längsachse der schraubenförmigen Abschnitte verläuft, jedenfalls aber nicht mehr als 15° von der Richtung der Längsachse der schraubenförmigen Abschnitte abweicht. Der Innendurchmesser der schraubenfederförmigen Abschnitte entspricht im Gleichgewichtszustand dem Außendurchmesser der Scheitelbögen 13 der Messrohre 10. Wenn also die schraubenförmigen Abschnitte zur Montage leicht gegen ihren Drehsinn elastisch verdrillt werden, um den Innendurchmesser zu weiten, können sie nahezu reibungsfrei auf die Messrohre geschoben und positioniert werden. Nach Relaxieren der elastischen Verdrillung ist die Position des Versteifungskörpers auf dem Messrohr im Reibschluss fixiert. Hierbei ist eine radiale Projektion der Massenverteilung der Versteifungskörper 20 auf die Mittenlinie des jeweiligen Messrohrs 10 spiegelsymmetrisch zur Messrohrquerebene EQ. Die Verbindungsabschnitte 26 schneidet dabei jeweils die Messrohrquerebene und überbrücken somit einen windungsfreien Bereich, in dem die Erregeranordnung 30 angeordnet ist, wie in Fig. 1 dargestellt ist.

Zum endgültigen Fixieren der Versteifungskörper 20 auf den Messrohren 10 wird ein Hartlotmaterial entlang der Versteifungskörper 20 aufgebracht, beispielsweise als Lotpaste. In einem Hochtemperatur-(Vakuum-)Lötprozess wird das Lotmaterial aufgeschmolzen und benetzt die Grenzflächen zwischen den Versteifungskörpern 20 und dem jeweiligen Messrohr 10, wodurch beim Erkalten des Lotmaterials Fügestellen 30 zwischen den Versteifungskörpern 20 und den Messrohren 10 ausgebildet werden, wie in Fig. 3 dargestellt ist.

Aus der Aufsicht in Fig 4a auf zwei parallel geführte Messrohre 10 mit Versteifungskörpern 20 geht hervor, dass die Windungen der Versteifungskörper den gleichen Drehsinn und im Raum zwischen den Messrohren 10 an deren breitester Stelle jeweils einen Phasenversatz von einer halben Windung zueinander aufweisen. Damit ist verhindert, dass sich die Versteifungskörper 20 beim Schwingen der Messrohre gegenseitig berühren. Der Abstand der Messrohre muss daher mindestens nur eine Materialstärke des Versteifungskörpers betragen. Auch dieser Aspekt ist mit den Versteifungsringen nach dem Stand der Technik nicht realisierbar, da diese Ringe bei benachbarten Messrohren an der gleichen Position montiert sind. Um dennoch einen geringen Messrohrabstand zu realisieren, können die Versteifungskörper seitliche Abflachungen aufweisen, wie in Fig. 5 dargestellt, was die Verstefungskörper jedoch einerseits schwächt und andererseits eine teurere Herstellung erfordert.

Fig. 4b zeigt eine Weiterbildung der Erfindung, mit modifizierten Versteifungskörpern 120, bei denen im Unterschied zu den Versteifungskörpern 20 in Fign. 1 und 2 der Drehsinn der schraubenfederförmigen Abschnitte 122, 124, die jeweils durch einen Verbindungsabschnitt 126 miteinander verbunden sind, entgegengesetzt ist. Auf diese Weise ist für die Versteifungskörper die Spiegelsymmetrie bezüglich der Mesrohrquerebene EQ eingehalten, die beim Ausführungsbeispiel gemäß Fign. 1 und 2 nicht gegeben ist. Damit kann ein ohnehin geringer Einfluss von radialen Temperaturgradienten auf die Messrohre, beispielsweise bei Wechsel zwischen Medien unterschiedlicher Temperaturen, weiter reduziert werden.

## Patentansprüche

1. Coriolis-Massedurchflussmessaufnehmer (1), umfassend:

mindestens ein erstes schwingfähiges Messrohr (10) zum Führen eines Mediums;
mindestens einen Trägerkörper (46), wobei das mindestens eine erste Messrohr (10) einlaufseitig und auslaufseitig mit dem Trägerkörper (46) verbunden ist;
mindestens einen Erreger (30) zum Anregen mindestens einer Biegeschwingungsmode des mindestens einen ersten Messrohrs;
mindestens zwei Schwingungssensoren (31, 32) zum Erfassen von Schwingungen des mindestens einen ersten Messrohrs (10); und
mindestens einen ersten Versteifungskörper (20), welcher an einer Mantelfläche des mindestens einen ersten Messrohrs (10) befestigt ist und das mindestens einer erste Messrohr (10) umgreift,
**dadurch gekennzeichnet, dass** der mindestens eine erste Versteifungskörper (20) zumindest abschnittsweise einen helikalen Verlauf mit mehreren Windungen aufweist, wobei der Abstand zwischen zwei benachbarten Windungen des Versteifungskörpers (20) nicht weniger als das Doppelte, beispielsweise nicht weniger als das Vierfache, und insbesondere nicht weniger als das Achtfache der Materialstärke des Versteifungskörpers (20) im Bereich der Windungen beträgt.

2. Coriolis-Massedurchflussmessaufnehmer (1) nach Anspruch 1, wobei die Materialstärke des mindestens einen ersten Versteifungskörpers (20) nicht weniger als die Hälfte, beispielsweise nicht weniger als drei Viertel einer Wandstärke des mindestens einen ersten Messrohrs (10) beträgt.

3. Coriolis-Massedurchflussmessaufnehmer (1) Anspruch 1 oder 2, wobei das mindestens eine erste Messrohr einen ersten Werkstoff aufweist, und wobei der mindestens eine erste Versteifungskörper (20) einen zweiten Werkstoff aufweist, wobei der Wärmeausdehnungskoeffizient des ersten Werkstoffs nicht mehr als 2 ppm/K beispielsweise nicht mehr als 1 ppm/K und insbesondere nicht mehr als 0,5 ppm/K vom Wärmeausdehnungskoeffizienten des zweiten Werkstoffs abweicht.

4. Coriolis-Massedurchflussmessaufnehmer (1) nach Anspruche 3, wobei der erste Werkstoff metallisch ist, und wobei der zweite Werkstoff metallisch ist.

5. Coriolis-Massedurchflussmessaufnehmer (1) nach einem der vorhergehenden Ansprüche, wobei der mindestens eine Versteifungskörper (20) mit dem mindestens einen Messrohr (10) mittels mindestens einer Fügestelle (28), welche insbesondere eine Hartlotverbindung umfasst, verbunden ist

6. Coriolis-Massedurchflussmessaufnehmer (1) nach Anspruch 5, wobei sich die mindestens eine Fügestelle (28) über mindestens eine, beispielsweise mindestens zwei und insbesondere mindestens drei Windungen des mindestens einen Versteifungskörpers (20) um das mindestens einer Messrohr (10) erstreckt.

7. Coriolis-Massedurchflussmessaufnehmer (1) nach einem der vorhergehenden Ansprüche, wobei der mindestens eine Versteifungskörper (20) zumindest einen Abschnitt (22, 24; 122; 124) aufweist, welcher Abschnitt zumindest drei, beispielsweise zumindest sechs und insbesondere zumindest acht kontinuierlichen Windungen umfasst.

8. Coriolis-Massedurchflussmessaufnehmer (1) nach einem der vorhergehenden Ansprüche, wobei das mindestens eine Messrohr bezüglich einer Messrohrquerebene einen spiegelsymmetrischen Verlauf hat, wobei das mindestens eine Messrohr zwischen der Messrohrquerebene und einem einlaufseitigen Ende des Messrohrs zumindest einen in der Ruhelage des Messrohrs gebogenen Abschnitt aufweist, in dem sich die Richtung einer Messrohrmittenlinie des mindestens einen Messrohrs (10) um einen Winkel $\delta$ ändert, der nicht kleiner als 30° ist, wobei der mindestens eine Versteifungskörper in dem gebogenen Abschnitt nicht weniger als a Windungen aufweist, wobei gilt: $a \geq \delta / 20°$, beispielsweise $a \geq \delta / 15°$, und insbesondere $a \geq \delta / 10°$.

9. Coriolis-Massedurchflussmessaufnehmer (1) nach einem der Ansprüche 1 bis 7, wobei das Messrohr bezüglich einer Messrohrquerebene einen spiegelsymmetrischen Verlauf hat, wobei das Messrohr zwischen der Messrohrquerebene und einem einlaufseitigen Ende des Messrohrs zumindest einen in der Ruhelage des Messrohrs gebogenen Abschnitt aufweist, in dem sich die Richtung einer Messrohrmittenlinie um einen Winkel $\delta$ ändert, der nicht kleiner als 30° ist, wobei das Messrohr einen Innendurchmesser d aufweist, wobei die Messrohrmittenlinie im gebogenen Abschnitt einen effektiven Krümmungsradius $r_K$ aufweist, wobei ein Verhältnis $V = 4 \cdot d / r_K$ gegeben ist, wobei der mindestens eine Versteifungskörper in dem gebogenen Abschnitt nicht weniger als b Windungen aufweist, wobei gilt: $b \geq \delta \cdot V / 20°$, beispielsweise $b \geq \delta \cdot V / 15°$, und insbesondere $b \geq \delta \cdot V / 10°$.

10. Coriolis-Massedurchflussmessaufnehmer (1) nach einem der vorhergehenden Ansprüche, wobei der Versteifungskörper (20; 120) einen ersten Abschnitt (22; 122) mit Windungen aufweist die das Messrohr (10; 110) umgreifen, und wobei der Versteifungskörper einen zweiten Abschnitt (24; 124) mit Windungen aufweist, die das Messrohr umgreifen, wobei zwischen dem ersten Abschnitt (22; 122) und dem zweiten Abschnitt (24; 124) ein Verbindungsabschnitt (26; 126) verläuft, wobei die Länge des Verbindungsabschnitts (26; 126), nicht mehr als das Doppelte, des Abstands des ersten Abschnitts vom zweiten Abschnitt in Richtung der Messrohrmittenlinie beträgt.

11. Coriolis-Massedurchflussmessaufnehmer (1) nach Anspruch 5, wobei die Hartlotverbindung ein Nickelbasislot umfasst.

12. Coriolis-Massedurchflussmessaufnehmer (1) nach einem der vorhergehenden Ansprüche, wobei für den Messaufnehmer ein Kalibrierfaktor calf bestimmbar ist, welcher eine proportionale Beziehung zwischen einer zu messenden Massendurchflussrate dm/dt und einer Phasendifferenz bzw. Zeitdifferenz zwischen Signalen der Schwingungssensoren beschreibt,

wobei der Kalibrierfaktor calf eine relative Querempfindlichkeit $\Delta$calf($\Delta$p) zur Differenz $\Delta$p zwischen den Druck im Messrohr und den Druck in der Umgebung des Messrohrs aufweist, die gegeben ist als

$$\Delta calf(\Delta p) := (calf(p) - calf(p0)) / calf(p0)$$

wobei für den Betrag der relativen Querempfindlichkeit |$\Delta$calf($\Delta$p)| bei einem Temperaturgleichgewicht zwischen Medium, Messrohr und Umgebung des Messaufnehmers bei einer Temperatur von 300 K in linearer Näherung gilt:

$$|\Delta calf(\Delta p)| < S \cdot d_i/t \cdot \Delta p,$$

wobei di der Innendurchmesser des mindesten einen Messrohrs ist, t die Wandstärke des Mindestens einen Messrohrs beschreibt und S eine obere Proportionalitätsschranke ist, für die gilt: S < 6 ppm/bar, beispielsweise S < 5 ppm/bar, und insbesondere S < 4 ppm/bar.

13. Coriolis-Massedurchflussmessaufnehmer (1) nach einem der vorhergehenden Ansprüche, wobei für den Messaufnehmer ein Kalibrierfaktor calf bestimmbar ist, welcher eine proportionale Beziehung zwischen einer zu messenden Massendurchflussrate dm/dt und einer Phasendifferenz bzw. Zeitdifferenz zwischen Signalen der Schwingungssensoren beschreibt,

wobei der Kalibrierfaktor calf eine relative Querempfindlichkeit $\Delta$calf($\Delta$p) zur Differenz $\Delta$p zwischen den Druck im Messrohr und den Druck in der Umgebung des Messrohrs aufweist, die gegeben ist als

$$\Delta calf(\Delta p) := (calf(p) - calf(p0)) / calf(p0)$$

wobei für den Betrag der relativen Querempfindlichkeit |$\Delta$calf($\Delta$p)| bei einem Temperaturgleichgewicht zwischen Medium, Messrohr und Umgebung des Messaufnehmers bei einer Temperatur von 300 K in linearer Näherung gilt:

$$|\Delta calf(\Delta p)| = K \cdot \Delta p,$$

wobei K eine gerätespezifische Konstante ist,
wobei für den Betrag der relativen Querempfindlichkeit eines Referenzmessaufnehmers in linearer Näherung gilt:

$$|\Delta calf_{ref}(\Delta p)| = K_{ref} \cdot \Delta p$$

wobei der Referenzmessaufnehmer bis auf den Versteifungskörper, welcher bei dem Referenzmessaufnehmer entfällt, mit dem Coriolis-Massedurchflussmessaufnehmer identisch ist, wobei gilt: $K_{ref}/K > 2$, insbesondere $K_{ref}/K > 3$.

14. Coriolis-Massedurchflussmessaufnehmer (1) nach einem der vorhergehenden Ansprüche, weiterhin umfassend:

mindestens ein zweites schwingfähiges Messrohr zum Führen eines Mediums, welches im Wesentlichen baugleich ist mit dem mindestens einen ersten Messrohr, und parallel zu letzterem geführt ist;

mindestens einen zweiten Versteifungskörper, welcher an einer Mantelfläche des mindestens einen zweiten Messrohrs befestigt ist und das mindestens eine zweite Messrohr umgreift,

wobei der mindestens eine zweite Versteifungskörper einen zumindest abschnittsweise helikalen Verlauf mit mehreren Windungen aufweist, wobei der Abstand zwischen zwei benachbarten Windungen des mindestens einen zweiten Versteifungskörpers nicht weniger als das Doppelte, beispielsweise nicht weniger als das Vierfache, und insbesondere nicht weniger als das Achtfache der Materialstärke des mindestens einen zweiten Versteifungskörpers im Bereich der Windungen beträgt,

der Materialstärke des mindestens einen zweiten Versteifungskörpers im Bereich der Windungen gleich der Materialstärke des mindestens einen ersten Versteifungskörpers im Bereich der Windungen ist

wobei der Abstand zwischen dem mindestens einen ersten Messrohr und dem mindestens einen zweiten Messrohr mehr als die einfache Materialstärke der ersten und zweiten Versteifungskörper im Bereich der Windungen beträgt, und

wobei der Abstand zwischen dem mindestens einen ersten Messrohr und dem mindestens einen zweiten Messrohr weniger als das Doppelte der Materialstärke der Versteifungskörper im Bereich der Windungen beträgt.

## Claims

1. A Coriolis mass flowmeter (1), comprising:

   At least one first measuring tube (10) capable of oscillating for conducting a medium;
   at least one support body (46), wherein the at least one first measuring tube (10) is connected to the support body (46) on the inlet side and on the outlet side;
   at least one exciter (30) for initiating at least one bending oscillation mode of the at least one first measuring tube;
   at least two oscillation sensors (31, 32) for detecting oscillations of the at least one first measuring tube (10); and
   at least one first stiffening body (20) which is secured to a lateral surface of the at least one first measuring tube (10) and surrounds the at least one first measuring tube (10),
   **characterized in that** the at least one first stiffening body (20) has, at least in sections, a helical shape with multiple coils, wherein the distance between two adjacent coils of the stiffening body (20) is not less than double, for example not less than four times, and in particular not less than eight times, the material thickness of the stiffening body (20) in the area of the coils.

2. The Coriolis mass flowmeter (1) as claimed in claim 1, wherein the material thickness of the at least one first stiffening body (20) is not less than half, for example not less than three quarters, of a wall thickness of the at least one first measuring tube (10).

3. The Coriolis mass flowmeter (1) as claimed in claim 1 or 2, wherein the at least one first measuring tube has a first material, and wherein the at least one first stiffening body (20) has a second material, wherein the coefficient of thermal expansion of the first material deviates from the coefficient of thermal expansion of the second material by no more than 2 ppm/K, for example no more than 1 ppm/K, and in particular no more than 0.5 ppm/K.

4. The Coriolis mass flowmeter (1) as claimed in claim 3, wherein the first material is metallic, and wherein the second material is metallic.

5. The Coriolis mass flowmeter (1) as claimed in one of the preceding claims, wherein the at least one stiffening body (20) is connected to the at least one measuring tube (10) by means of at least one joint (28) which comprises, in particular, a brazed connection.

6. The Coriolis mass flowmeter (1) as claimed in claim 5, wherein the at least one joint (28) extends over at least one, for example at least two, and in particular at least three, coils of the at least one stiffening body (20) around the at least one measuring tube (10).

7. The Coriolis mass flowmeter (1) as claimed in one of the preceding claims, wherein the at least one stiffening body (20) has at least one section (22, 24; 122; 124), said section comprising at least three, for example at least six, and in particular at least eight, continuous coils.

8. The Coriolis mass flowmeter (1) as claimed in one of the preceding claims, wherein the at least one measuring tube runs mirror-symmetrically relative to a measuring tube transverse plane, wherein the at least one measuring tube has, between the measuring tube transverse plane and an inlet-side end of the measuring tube, at least one section which is curved in the idle position of the measuring tube, in which section the direction of a measuring tube center line of the at least one measuring tube (10) changes by an angle $\delta$ which is not less than 30°, wherein the at least one stiffening body in the curved section has no fewer than a coils, wherein: $a \geq \delta / 20°$, for example $a \geq \delta / 15°$, and in particular $a \geq \delta / 10°$.

9. The Coriolis mass flowmeter (1) as claimed in one of claims 1 to 7, wherein the measuring tube runs mirror-symmetrically relative to a measuring tube transverse plane, wherein the measuring tube has, between the measuring tube transverse plane and an inlet-side end of the measuring tube, at least one section which is curved in the idle position of the measuring tube, in which section the direction of a measuring tube center line changes by an angle $\delta$ which is not less than 30°, wherein the measuring tube has an internal diameter d, wherein the measuring tube center line in the curved section has an effective radius of curvature $r_y$, wherein a ratio $V = 4 \cdot d / r_K$ is expressed, wherein the at least one stiffening body in the curved section has no fewer than b coils, wherein: $b \geq \delta \cdot V / 20°$, for example $b \geq \delta \cdot V / 15°$, and in particular $b \geq \delta \cdot V / 10°$.

10. The Coriolis mass flowmeter (1) as claimed in one of the preceding claims, wherein the stiffening body (20; 120) has a first section (22; 122) with coils which surround the measuring tube (10; 110), and wherein the stiffening body has a second section (24; 124) with coils which surround the measuring tube, wherein a connecting section (26; 126) extends between the first section (22; 122) and the second section (24; 124), wherein the length of the connecting section (26; 126) is no more than double the distance from the first section to the second section in the direction of the measuring tube center line.

11. The Coriolis mass flowmeter (1) as claimed in claim 5, wherein the brazed connection comprises a nickel-based solder.

12. The Coriolis mass flowmeter (1) as claimed in one of the preceding claims, wherein a calibration factor calf can be established for the mass flowmeter, which describes a proportional relationship between a mass flow rate dm/dt to be measured and a phase difference or time difference between signals from the oscillation sensors,

   wherein the calibration factor calf has a relative cross-sensitivity $\Delta$calf($\Delta$p) to the difference $\Delta$p between the pressure in the measuring tube and the pressure in the environment around the measuring tube, which is expressed as

$$\Delta\text{calf}(\Delta p) := (\text{calf}(p) - \text{calf}(p0)) / \text{calf}(p0)$$

   wherein the following applies to the value of relative cross-sensitivity $|\Delta\text{calf}(\Delta p)|$ at a temperature equilibrium between the medium, measuring tube and environment around the mass flowmeter at a temperature of 300 K in linear approximation:

$$|\Delta\text{calf}(\Delta p)| < S \bullet d_i/t \bullet \Delta p,$$

   wherein di is the internal diameter of the at least one measuring tube, t describes the wall thickness of the at least one measuring tube, and S is its upper proportionality limit, to which the following applies: S < 6 ppm/bar, for example S < 5 ppm/bar, and in particular S < 4 ppm/bar.

13. The Coriolis mass flowmeter (1) as claimed in one of the preceding claims, wherein a calibration factor calf can be established for the mass flowmeter, which describes a proportional relationship between a mass flow rate dm/dt to be measured and a phase difference or time difference between signals from the oscillation sensors,

   wherein the calibration factor calf has a relative cross-sensitivity $\Delta$calf($\Delta$p) to the difference $\Delta$p between the pressure in the measuring tube and the pressure in the environment around the measuring tube, which is expressed as

$$\Delta\text{calf}(\Delta p) := (\text{calf}(p) - \text{calf}(p0)) / \text{calf}(p0)$$

wherein the following applies to the value of relative cross-sensitivity $|\Delta calf(\Delta p)|$ at a temperature equilibrium between the medium, measuring tube and environment around the mass flowmeter at a temperature of 300 K in linear approximation:

$$|\Delta calf(\Delta p)| = K \bullet \Delta p,$$

wherein K is a device-specific constant,
wherein the following applies in linear approximation for the value of the relative cross-sensitivity of a reference flowmeter:

$$|\Delta calf_{ref}(\Delta p)| = K_{ref} \bullet \Delta p,$$

wherein the reference flowmeter is identical to the Coriolis mass flowmeter, which the exception of the stiffening body, which is not present on the reference flowmeter, wherein: $K_{ref} / K > 2$, in particular $K_{ref} / K > 3$.

14. The Coriolis mass flowmeter (1) as claimed in one of the preceding claims, further comprising:

At least one second measuring tube capable of oscillating for conducing a medium, which is essentially identical in design to the at least one first measuring tube, and is routed parallel to the latter;
at least one second stiffening body which is secured to a lateral surface of the at least one second measuring tube and surrounds the at least one second measuring tube,
wherein the at least one second stiffening body has, at least in sections, a helical shape with multiple coils,
wherein the distance between two adjacent coils of the at least one second stiffening body is not less than double, for example not less than four times, and in particular not less than eight times, the material thickness of the at least one second stiffening body in the area of the coils,
the material thickness of the at least one second stiffening body in the area of the coils is equal to the material thickness of the at least one first stiffening body in the area of the coils,
wherein the distance between the at least one first measuring tube and the at least one second measuring tube is more than one times the material thickness of the first and second stiffening bodies in the area of the coils, and
wherein the distance between the at least one first measuring tube and the at least one second measuring tube is less than double the material thickness of the stiffening bodies in the area of the coils.

## Revendications

1. Débitmètre massique Coriolis (1), comprenant :

au moins un premier tube de mesure (10) apte à vibrer, lequel est destiné à guider un produit ;
au moins un corps de support (46), l'au moins un premier tube de mesure (10) étant relié au corps de support (46) du côté de l'entrée et du côté de la sortie ;
au moins un excitateur (30) destiné à exciter au moins un mode de vibration de flexion de l'au moins un premier tube de mesure ;
au moins deux capteurs de vibrations (31, 32) destinés à mesurer les vibrations de l'au moins un premier tube de mesure (10) ; et
au moins un premier corps raidisseur (20), lequel corps est fixé sur une surface d'enveloppe de l'au moins un premier tube de mesure (10) et lequel corps entoure l'au moins un premier tube de mesure (10),
**caractérisé en ce que** l'au moins un premier corps raidisseur (20) présente au moins par sections un tracé hélicoïdal avec plusieurs spires, la distance entre deux spires voisines du corps raidisseur (20) n'étant pas inférieure au double, par exemple pas inférieure au quadruple, et notamment pas inférieure à huit fois l'épaisseur du matériau du corps raidisseur (20) dans la zone des spires.

2. Débitmètre massique Coriolis (1) selon la revendication 1, pour lequel l'épaisseur du matériau de l'au moins un premier corps raidisseur (20) n'est pas inférieure à la moitié, par exemple pas inférieure aux trois quarts, d'une épaisseur de paroi de l'au moins un premier tube de mesure (10).

3. Débitmètre massique Coriolis (1) selon la revendication 1 ou 2,

pour lequel l'au moins un premier tube de mesure comprend un premier matériau, et

pour lequel l'au moins un premier corps raidisseur (20) comprend un deuxième matériau,

le coefficient de dilatation thermique du premier matériau ne différant pas de plus de 2 ppm/K, par exemple pas de plus de 1 ppm/K et notamment pas de plus de 0,5 ppm/K, du coefficient de dilatation thermique du deuxième matériau.

4. Débitmètre massique Coriolis (1) selon la revendication 3,

pour lequel le premier matériau est métallique et

pour lequel le deuxième matériau est métallique.

5. Débitmètre massique Coriolis (1) selon l'une des revendications précédentes, pour lequel l'au moins un corps raidisseur (20) est relié avec l'au moins un tube de mesure (10) au moyen d'au moins un point d'assemblage (28), lequel comprend notamment une brasure.

6. Débitmètre massique Coriolis (1) selon la revendication 5, pour lequel l'au moins un point d'assemblage (28) s'étend autour de l'au moins un tube de mesure (10) sur au moins une, par exemple au moins deux et notamment au moins trois spires de l'au moins un corps raidisseur (20).

7. Débitmètre massique Coriolis (1) selon l'une des revendications précédentes, pour lequel l'au moins un corps raidisseur (20) comprend au moins une section (22, 24 ; 122 ; 124), laquelle section comprend au moins trois, par exemple au moins six, et notamment au moins huit spires continues.

8. Débitmètre massique Coriolis (1) selon l'une des revendications précédentes, pour lequel l'au moins un tube de mesure présente un tracé symétrique par rapport à un plan transversal du tube de mesure, l'au moins un tube de mesure présentant, entre le plan transversal de tube de mesure et une extrémité d'entrée du tube de mesure, au moins une section courbée dans la position de repos du tube de mesure, section dans laquelle la direction d'une ligne médiane de tube de mesure de l'au moins un tube de mesure (10) change d'un angle $\delta$ qui n'est pas inférieur à 30°, l'au moins un corps raidisseur dans la section courbée ne présentant pas moins de a spires, avec la relation suivante : $a \geq \delta$ / 20°, par exemple $a \geq \delta$ / 15°, et notamment $a \geq \delta$ / 10°.

9. Débitmètre massique Coriolis (1) selon l'une des revendications 1 à 7, pour lequel le tube de mesure présente un tracé symétrique par rapport à un plan transversal de tube de mesure, le tube de mesure comprenant, entre le plan transversal de tube de mesure et une extrémité d'entrée du tube de mesure, au moins une section courbée dans la position de repos du tube de mesure, section dans laquelle la direction d'une ligne médiane de tube de mesure varie d'un angle $\delta$, qui n'est pas inférieur à 30°, le tube de mesure présentant un diamètre intérieur d, la ligne médiane de tube de mesure dans la section courbée présentant un rayon de courbure effectif $r_K$, un rapport $V = 4 \cdot d / r_K$ étant défini, l'au moins un corps raidisseur dans la section courbée ne présentant pas moins de b spires, avec la relation suivante : $b \geq \delta \cdot V$ / 20°, par exemple $b \geq \delta \cdot V$ / 15°, et notamment $b \geq \delta \cdot V$ / 10°.

10. Débitmètre massique Coriolis (1) selon l'une des revendications précédentes, pour lequel le corps raidisseur (20 ; 120) comporte une première section (22 ; 122) avec des spires qui entourent le tube de mesure (10 ; 10), et

pour lequel le corps raidisseur comporte une deuxième section (24 ; 124) avec des spires qui entourent le tube de mesure, une section de connexion (26 ; 126) s'étendant entre la première section (22 ; 122) et la deuxième section (24 ; 124), la longueur de la section de connexion (26 ; 126) n'étant pas supérieure au double de la distance entre la première section et la deuxième section dans la direction de la ligne médiane de tube de mesure.

11. Débitmètre massique Coriolis (1) selon la revendication 5, pour lequel la brasure comprend un métal d'apport à base de nickel.

12. Débitmètre massique Coriolis (1) selon l'une des revendications précédentes, pour lequel un facteur d'étalonnage calf peut être déterminé pour le capteur, lequel facteur décrit une relation proportionnelle entre un débit massique dm/dt à mesurer et une différence de phase ou une différence de temps entre les signaux des capteurs de vibrations,

le facteur d'étalonnage calf présentant une sensibilité transversale relative $\Delta$calf($\Delta$p) à la différence $\Delta$p entre la pression dans le tube de mesure et la pression dans l'environnement du tube de mesure, qui est donnée par la formule suivante :

$$\Delta calf(\Delta p) := (calf(p) - calf(p0)) / calf(p0)$$

où, pour la valeur de la sensibilité transversale relative $|\Delta calf(\Delta p)|$ dans le cas d'un équilibre de température entre le produit, le tube de mesure et l'environnement du capteur à une température de 300 K, on a, par approximation linéaire, la relation suivante :

$$|\Delta calf(\Delta p)| < S \cdot di/t \cdot \Delta p,$$

où di est le diamètre intérieur de l'au moins un tube de mesure, t décrit l'épaisseur de paroi de l'au moins un tube de mesure et S est une limite supérieure de proportionnalité pour laquelle on a la relation suivante : $S < 6$ ppm/bar, par exemple $S < 5$ ppm/bar, et notamment $S < 4$ ppm/bar.

13. Débitmètre massique Coriolis (1) selon l'une des revendications précédentes, pour lequel un facteur d'étalonnage calf peut être déterminé pour le capteur, lequel facteur d'étalonnage calf décrit une relation proportionnelle entre un débit massique dm/dt à mesurer et une différence de phase ou une différence de temps entre les signaux des capteurs de vibrations,

le facteur d'étalonnage calf étant une sensibilité transversale relative $\Delta calf(\Delta p)$ à la différence $\Delta p$ entre la pression dans le tube de mesure et la pression dans l'environnement du tube de mesure, par la formule suivante :

$$\Delta calf(\Delta p) := (calf(p) - calf(p0)) / calf(p0)$$

où, pour la valeur de la sensibilité transversale relative $|\Delta calf(\Delta p)|$ dans le cas d'un équilibre de température entre le produit, le tube de mesure et l'environnement du capteur à une température de 300 K, on a, par approximation linéaire, la relation suivante :

$$|\Delta calf(\Delta p)| = K \cdot \Delta p,$$

où K est une constante spécifique à l'appareil,
où, pour la valeur de la sensibilité transversale relative d'un capteur de référence, on a, par approximation linéaire, la relation suivante :

$$|\Delta calf_{ref}(\Delta p)| = K_{ref} \cdot \Delta p$$

où le capteur de référence est identique au débitmètre massique Coriolis, à l'exception du corps raidisseur qui est supprimé dans le capteur de référence, la relation suivante s'appliquant : $K_{ref} / K > 2$, notamment $K_{ref} / K > 3$.

14. Débitmètre massique Coriolis (1) selon l'une des revendications précédentes, comprenant en outre :

au moins un deuxième tube de mesure apte à vibrer destiné au guidage d'un produit, lequel deuxième tube est pour l'essentiel de construction identique à l'au moins un premier tube de mesure et lequel deuxième tube est guidé parallèlement à ce dernier ;
au moins un deuxième corps raidisseur, lequel deuxième corps est fixé sur une surface d'enveloppe de l'au moins un deuxième tube de mesure et lequel deuxième corps entoure l'au moins un deuxième tube de mesure,
l'au moins un deuxième corps raidisseur présentant un tracé hélicoïdal au moins par sections avec plusieurs spires, la distance entre deux spires voisines de l'au moins un deuxième corps raidisseur n'étant pas inférieure au double, par exemple pas inférieure au quadruple, et notamment pas inférieure à huit fois l'épaisseur de matériau de l'au moins un deuxième corps raidisseur dans la zone des spires,
l'épaisseur de matériau de l'au moins un deuxième corps raidisseur dans la zone des spires étant égale à l'épaisseur de matériau de l'au moins un premier corps raidisseur dans la zone des spires
la distance entre l'au moins un premier tube de mesure et l'au moins un deuxième tube de mesure étant supérieure à une fois l'épaisseur de matériau des premier et deuxième corps raidisseurs dans la zone des spires, et
la distance entre l'au moins un premier tube de mesure et l'au moins un deuxième tube de mesure étant inférieure au double de l'épaisseur de matériau des corps raidisseurs dans la zone des spires.

**Fig. 1**

**Fig. 2**

**Fig. 3**

**Fig. 4a**

**Fig. 4b**

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1427998 B1
- WO 2016202537 A1
- US 10845227 B2